# EUROPÄISCHE PATENTSCHRIFT

(11) **EP 2 145 907 B1**
(45) Veröffentlichungstag und Bekanntmachung des Hinweises auf die Patenterteilung: **22.12.2010**
(21) Anmeldenummer: 08160314.4
(22) Anmeldetag: 14.07.2008
(51) Int. Cl.: C08G 18/12, C08G 18/42, C09J 175/04

(54) **Amorphes Polyurethanpolymer und dessen Verwendung in Heissschmelzklebstoffen**
Amorphous polyurethane polymer and use thereof in hotmelt adhesives
Polymère de polyuréthane amorphe et son utilisation dans des colles fusibles à chaud

(43) Veröffentlichungstag der Anmeldung: 20.01.2010
(73) Patentinhaber: Sika Technology AG, 6340 Baar (CH)
(72) Erfinder: Janke, Doreen, 25486 Alveslohe (DE); Paschkowski, Kai, 21635, Jork (DE)
(74) Vertreter: Sika Patent Attorneys

(56) Entgegenhaltungen:
- EP-A- 1 923 445
- WO-A-2007/036575
- WO-A-2008/052999

## Beschreibung

### Technisches Gebiet

Die vorliegende Erfindung betrifft das Gebiet der Polyurethanpolymere und das Gebiet der Heissschmelzklebstoffe.

### Stand der Technik

Amorphe Thermoplasten werden schon seit längerem in Heissschmelzklebstoffen eingesetzt. Derartige Heissschmelzklebstoffe zeigen jedoch eine sehr schlechte Beibehaltung der dreidimensionalen Form, d.h. die bei der Applikation vorgegebene Form ist innert kürzester Zeit durch ein Fliessen des Klebstoffs derart stark verändert, dass die Klebstoffgeometrie für viele Applikationen nicht mehr akzeptierbar ist.

Aldimingruppen-terminierte Polyurethanpolymere werden von WO 2008/052999 A1 in Kombination mit einem flüssigen Polyurethanpolymer für den Einsatz in Heissschmelzklebstoffen zur Beeinflussung der Offenzeit und Anfangsfestigkeit vorgeschlagen.

### Darstellung der Erfindung

Aufgabe der vorliegenden Erfindung ist es daher, ein thermoplastisches Polymer zur Verfügung zu stellen, welches reaktiv vernetzbar ist, ein wesentlich geringeres Fliessen des applizierten Klebstoffs aufweist und sich insbesondere für das Verkleben von transparenten Substraten eignet.

Überraschenderweise wurde gefunden, dass diese Aufgabe durch ein amorphes Polyurethanpolymer gemäss Anspruch 1 sowie eine Heissschmelzklebstoffzusammensetzung gemäss Anspruch 11 gelöst werden kann.

Es hat sich weiterhin gezeigt, dass durch den Zusatz dieser Polyurethanpolymere die mechanischen Eigenschaften eines Klebstoffs nicht negativ sondern sogar positiv beeinflusst werden. Insbesondere wurde gefunden, dass das Kriechen unter Last stark reduziert wird.

Durch die Transparenz des Polyurethanpolymers nach Aushärtung bedingt, lassen sich bestens transparente Verklebungen erreichen. Die Polyurethanpolymere der Formel (I) lassen sich auf einfache Art und Weise herstellen und zeichnen sich durch ein schnelles blasenfreies Aushärten aus. Die Polyurethanpolymere der Formel (I) sind einfach in die Matrix chemisch einbindbar, wodurch sich ein gutes Auswaschverhalten und Langzeitbeständigkeit ergeben. Die bei der Reaktion mit Wasser entstehenden Aldehyde sind schwer flüchtig, insbesondere geruchsfrei, und sind deshalb vor allem für Innenanwendungen bestens geeignet.

Eine besondere Kerneigenschaft des erfindungsgemässen amorphen Polyurethanpolymers stellt die stark verbesserte Formbeständigkeit, d.h. das deutlich geringere Fliessen, des Klebstoffs nach der Applikation dar.

Weitere Aspekte der Erfindung sind Gegenstand weiterer unabhängiger Ansprüche. Besonders bevorzugte Ausführungsformen der Erfindung sind Gegenstand der abhängigen Ansprüche

### Wege zur Ausführung der Erfindung

In einem ersten Aspekt betrifft die vorliegende Erfindung ein amorphes, bei Raumtemperatur festes Polyurethanpolymer der Formel (I).

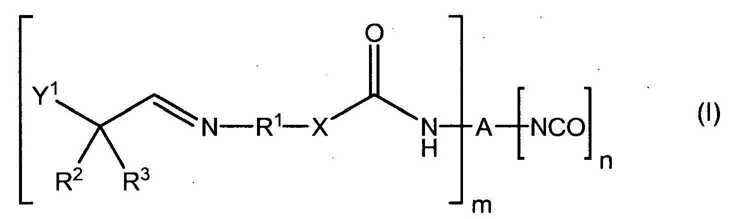

Hierbei steht R¹ für einen zweiwertigen aliphatischen oder cycloaliphatischen oder araliphatischen Kohlenwasserstoffrest mit 2 bis 12 C-Atomen, welcher gegebenenfalls mindestens ein Heteroatom, insbesondere in Form von Ether-Sauerstoff oder tertiärem Amin-Stickstoff, aufweist.

Weiterhin stehen R² und R³ entweder unabhängig voneinander, je für einen einwertigen Kohlenwasserstoffrest mit 1 bis 12 C-Atomen, oder R² und R³ bilden zusammen einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen ist.

Y¹ steht für einen einwertigen Kohlenwasserstoffrest mit 1 bis 35 C-Atomen, welcher gegebenenfalls Heteroatome aufweist.

X steht für O oder S oder N-R⁶, wobei R⁶ entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureestergruppe aufweist, steht, oder R⁶ steht für einen Substituenten der Formel (II).

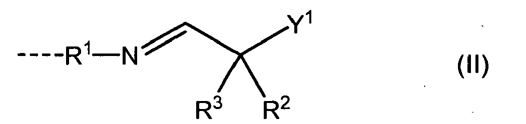

Zudem steht m für 1 oder 2 oder 3 und n steht für 0 oder 1 oder 2. Hierbei gilt die Massgabe, dass die Summe von m und n den Wert 2 oder 3 ergibt.

Weiterhin steht A für den Rest eines bei Raumtemperatur festen, Isocyanatgruppen aufweisenden Polyurethanpolymers **D** nach Entfernung von (m+n) Isocyanatgruppen. Das bei Raumtemperatur feste, Isocyanatgruppen aufweisende Polyurethanpolymer **D** wird aus der Reaktion einer Polyolmischung sowie mindestens eines Polyisocyanates **PI** hergestellt. Diese Polyolmischung umfasst mindestens ein bei Raumtemperatur flüssiges Polyesterpolyol **PE1** und mindestens ein bei Raumtemperatur festes amorphes Polyesterpolyol **PE2.**

Es gilt hierbei die Massgabe, dass in der Polyolmischung das Gewichts-Verhältnis an aller bei Raumtemperatur flüssigen Polyesterpolyole **PE1** zu aller bei Raumtemperatur festen amorphen Polyesterpolyole **PE2** < 1.25 ist.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Als "Raumtemperatur" wird eine Temperatur von 25 °C bezeichnet.

Alle Erweichungspunkte (Softening point) werden in diesem Dokumente nach der Ring & Kugel- Methode gemäss DIN ISO 4625 ermittelt.

Mit "Poly" beginnende Substanznamen wie Polyisocyanat oder Polyol bezeichnen im vorliegenden Dokument Substanzen, die formal zwei oder mehr der in ihrem Namen vorkommenden funktionellen Gruppen pro Molekül enthalten.

Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist.

Als "aliphatische Aminogruppe" wird eine Aminogruppe bezeichnet, die an einen aliphatischen, cycloaliphatischen oder araliphatischen Rest gebunden ist. Sie unterscheidet sich damit von einer "aromatischen Aminogruppe", welche direkt an einen aromatischen oder heteroaromatischen Rest gebunden ist, wie sie beispielsweise in Anilin oder 2-Aminopyridin vorliegt.

Als "aliphatische HX-Gruppe" wird eine Gruppe -HX bezeichnet, die an einen aliphatischen, cycloaliphatischen oder araliphatischen Rest gebunden ist. Sie unterscheidet sich damit von einer "aromatischen HX-Gruppe", welche direkt an einen aromatischen oder heteroaromatischen Rest gebunden ist, wie sie beispielsweise in Phenol oder N-Metyl-Anilin vorliegt.

Unter "Molekulargewicht" versteht man bei Oligomeren oder Polymeren im vorliegenden Dokument stets das Molekulargewichtsmittel Mₙ.

Die gestrichelten Linien in den Formeln in diesem Dokument stellen jeweils die Bindung zwischen einem Substituenten und dem zugehörigen Molekülrest dar.

Bevorzugt weist das Polyurethanpolymer **D** zwei Isocyanatgruppen auf, d.h. vorzugsweise ist die Summe von m und n gleich 2.

Weiterhin bevorzugt weist das Polyurethanpolymer der Formel (I) mindestens eine Isocyanatgruppe auf, d.h. dass der Wert von n gleich 1 oder 2, bevorzugt 1, ist.

Besonders bevorzugt ist diejenige Ausführungsform, bei der m=1 und n=1 ist.

Das Polyurethanpolymer der Formel (I) ist bei Raumtemperatur ein amorpher Festkörper. Es besitzt einen Erweichungspunkt von mehr als 25°C, insbesondere von mehr als 40°C, bevorzugt von mehr als 60°C.

Besonders bevorzugt stehen R² und R³ je für eine Methylgruppe.

Das amorphe, bei Raumtemperatur feste Polyurethanpolymer der Formel (I) kann hergestellt werden durch die Umsetzung eines Aldimins der Formel (XI), insbesondere der Formel (XI'), mit einem Isocyanatgruppen aufweisenden Polyurethanpolymer **D** der Formel (XII).

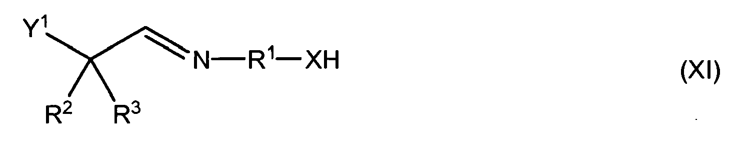

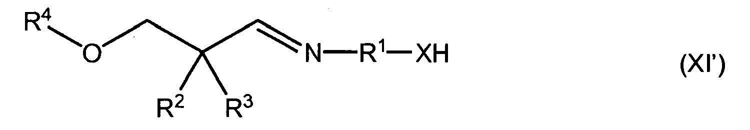

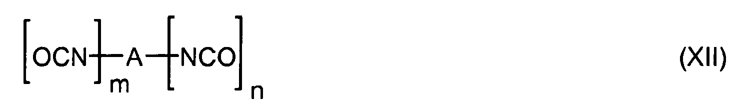

Diese Umsetzung wird vorteilhaft bei einer Temperatur durchgeführt, bei welcher das Polyurethanpolymer **D** der Formel (XII) im flüssigen Zustand vorliegt, gegebenenfalls unter Mitverwendung geeigneter Katalysatoren, wobei das Aldimin der Formel (XI), insbesondere der Formel (XI'), in Bezug auf die Isocyanatgruppen des Polyurethanpolymers **D** stöchiometrisch, leicht überstöchiometrisch oder unterstöchiometrisch dosiert ist.

In einer Ausführungsform ist das Aldimin der Formel (XI) in Bezug auf die Isocyanatgruppen des Polyurethanpolymers **D** unterstöchiometrisch, das heisst mit weniger als einem Molequivalent Gruppierungen "HX" auf ein Molequivalent Isocyanatgruppen, dosiert. Auf diese Weise entsteht ein Isocyanat- und Aldimingruppen aufweisendes Polyurethanpolymer der Formel (I), bei welchem also der Index n verscheiden von 0 ist.

In einer weiteren Ausführungsform ist das Aldimin der Formel (XI) in Bezug auf die Isocyanatgruppen des Polyurethanpolymers **D** stöchiometrisch oder leicht überstöchiometrisch, das heisst mit genau einem oder etwas mehr als einem Molequivalent Gruppierungen "HX" auf ein Molequivalent Isocyanatgruppen, dosiert. Auf diese Weise entstehen bei Raumtemperatur feste Aldimingruppen aufweisende Polyurethanpolymere der Formel (I), welche keine Isocyanatgruppen enthalten, bei welchen also der Index n für null steht und welche im Folgenden als Polyurethanpolymere **A1** bezeichnet werden.

Als Polyurethanpolymer der Formel (I) bevorzugt sind Polyurethanpolymere **A1,** da diese aufgrund der Abwesenheit von Isocyanatgruppen auch bei erhöhter Temperatur besonders lagerstabil sind. Insbesondere kann das Polyurethanpolymer **A1** im flüssigen Zustand, das heisst bei einer Temperatur oberhalb seines Schmelzpunkts, während längerer Zeit, typischerweise während mehrerer Wochen oder Monate, gelagert werden, ohne dass seine Viskosität bedeutend ansteigt. Dies steht im Gegensatz zum Verhalten von Isocyanatgruppen aufweisenden Schmelzkomponenten, wie sie aus dem Stand der Technik bekannt sind. Bedingt durch die hohe Reaktionsfähigkeit der Isocyanatgruppen, steigt dort die Viskosität solcher Schmelzkomponenten bei der Lagerung, insbesondere bei erhöhter Temperatur, typischerweise rasch an, was bis zur Gelierung führen kann. Die gute Lagerstabilität des Polyurethanpolymers der Formel (I) ist hingegen von erheblicher praktischer Bedeutung, da sich dadurch dessen NCO-haltige Zusammensetzungen während der Lagerung, auch bei erhöhter Temperatur, in ihren Applikations- und Aushärtungseigenschaften nicht oder nur wenig verändern und insbesondere weitgehend konstante, von Herstelldatum und Lagerbedingungen wenig abhängige Werte für die Offenzeit und die Anfangsfestigkeit aufweisen.

Ebenfalls bevorzugt sind Polyurethanpolymere der Formel (I), bei denen X für O oder für N-R⁶ steht. Meist bevorzugt steht X für O.

Speziell bevorzugt sind Polyurethanpolymere der Formel (I), bei denen X für O oder für N-R⁶ steht, wobei R⁶ für einen Kohlenwasserstoffrest mit 1 bis 4 C-Atomen, insbesondere für Methyl, Ethyl, Propyl oder Butyl, bevorzugt für Methyl, steht. Zusammensetzungen enthaltend diese Schmelzkomponenten zeigen einen schnellen Aufbau der Anfangsfestigkeit.

Bevorzugt sind Polyurethanpolymere der Formel (I), bei welchen Y¹ für einen Rest der Formel (III) steht.

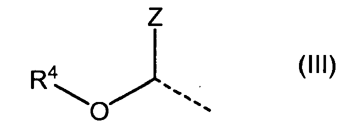

Hierbei steht Z für ein Wasserstoffatom oder für eine Alkyl- oder Arylalkylgruppe mit 1 bis 8 C-Atomen, bevorzugt für ein Wasserstoffatom.

Weiterhin steht R⁴ entweder für einen einwertigen Kohlenwasserstoffrest mit 1 bis 30 C-Atomen, welcher gegebenenfalls mindestens ein Heteroatom, insbesondere in Form von Ether-Sauerstoff, aufweist oder R⁴ steht für einen Rest 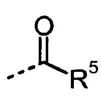 steht, wobei R⁵ seinerseits für einen einwertigen Kohlenwasserstoffrest mit 1 bis 30 C-Atomen steht, welcher gegebenenfalls mindestens ein Heteroatom, insbesondere in Form von Ether-Sauerstoff, aufweist.

In einer bevorzugten Ausführungsform steht Y¹ für den Rest der Formel (III) und R⁴ für den Rest 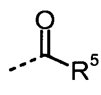 steht, wobei R⁵ für einen einwertigen Kohlenwasserstoffrest mit 1 bis 30 C-Atomen, insbesondere eine Alkylgruppe, mit 11 bis 30 C-Atomen steht.

Insbesondere ist es bevorzugt, dass entweder R⁴ oder R⁵ für einen einwertigen Kohlenwasserstoffrest, insbesondere für einen linearen oder verzweigten Alkylrest, mit 11 bis 30 C-Atomen steht. Diese bevorzugten Polyurethanpolymere der Formel (I) sowie die bei der Hydrolyse entstehenden Aldehyde sind geruchsfrei.

Das Polyurethanpolymer **D** der Formel (XII) wird aus einer Polyolmischung sowie mindestens eines Polyisocyanates **PI** hergestellt Diese Polyolmischung umfasst mindestens ein bei Raumtemperatur flüssiges Polyesterpolyol **PE1** und mindestens ein bei Raumtemperatur festes amorphes Polyesterpolyol **PE2.**

Als Polyesterpolyole zur Herstellung eines Polyurethanpolymers **D** besonders geeignet sind Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Pimelinsäure, Korksäure, Azelainsäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;

Die Polyesterpolyole **PE1** und Polyesterpolyol PE2 weisen vorteilhaft je ein Molekulargewicht zwischen 2'000 und 10'000 g/mol auf.

Polyesterpolyol **PE1** sind bei Raumtemperatur flüssig. Besonders geeignete bei Raumtemperatur flüssige Polyesterpolyole sind Polyesterdiole. Insbesondere geeignet sind Polyesterdiole, welche unterhalb von 0 °C, insbesondere zwischen -50°C und 0°C noch flüssig sind. Das bei Raumtemperatur flüssige Polyesterpolyol **PE1** weist vorzugsweise ein Molekulargewicht zwischen 2'000 und 8'000 g/mol, bevorzugt zwischen 4'000 und 7'000 g/mol, auf.

Polyesterpolyol **PE2** sind bei Raumtemperatur fest und amorph. Besonders bevorzugte Polyesterpolyole **PE2** sind Polyesterdiole, welche ausgewählt sind aus der Gruppe bestehend aus Adipinsäure/Hexandiol-Polyester, Azelainsäure/Hexandiol-Polyester und Dodecandicarbonsäure/Hexandiol-Polyester und welche einen Schmelzpunkt, bzw. Erweichungspunkt, im Bereich von 60°C bis 130°C, insbesondere 80°C bis 110°C aufweisen. Das bei Raumtemperatur feste, amorphe Polyesterpolyol **PE2** weist vorzugsweise ein Molekulargewicht zwischen 1'000 und 8'000 g/mol, bevorzugt zwischen 2'000 und 5'000 g/mol, meist bevorzugt zwischen 2'000 und 3'000 g/mol, auf.

Das Gewichts-Verhältnis an aller bei Raumtemperatur flüssigen Polyesterpolyole **PE1** zu aller bei Raumtemperatur festen amorphen Polyesterpolyole **PE2** ist < 1.25. Dieses Verhältnis liegt insbesondere zwischen 1.10 und 0.05, bevorzugt bei einem Wert von 0.50 - 0.10. Ist dieses Verhältnis grösser, steigt die Tendenz zum Fliessen. Wird lediglich bei Raumtemperatur festes Polyesterpolyol **PE2** verwendet, d.h., wenn dieses Verhältnis gleich 0 ist, ist eine derartige Zusammensetzung derart hochviskos, auch bei hohen Temperaturen, dass sie typischerweise sehr schwierig ist bei der Applikationstemperatur zu applizieren.

Als Polyisocyanate **PI** für die Herstellung eines Isocyanatgruppen enthaltenden Polyurethanpolymers **D** können handelsübliche aliphatische, cycloaliphatische oder aromatische Polyisocyanate, insbesondere Diisocyanate, verwendet werden, beispielsweise die folgenden:

1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomere und Polymere der vorgenannten Isocyanate, sowie beliebige Mischungen der vorgenannten Isocyanate. Bevorzugt sind MDI, TDI, HDI und IPDI.

Besonders bevorzugt ist das Polyisocyanat **PI** ein Diisocyanat, welches ausgewählt ist aus der Gruppe bestehend aus 1,6-Hexamethylendiisocyanat (HDI), 1-Isocyanato-3,3,5-trimethyl-5-isocyanatomethyl-cyclohexan (=Isophorondiisocyanat oder IPDI), 2,4- und 2,6-Toluylendiisocyanat und beliebige Gemische dieser Isomeren (TDI) sowie 4,4'-, 2,4'- und 2,2'-Diphenylmethandiisocyanat und beliebige Gemische dieser Isomeren (MDI).

Diese Umsetzung zum Isocyanatgruppen-aufweisenden Polyurethanpolymeren **D** der Formel (XII) erfolgt in an und für sich bekannter Art und Weise, insbesondere dadurch, dass das Polyol und das Polyisocyanat, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft beträgt das Verhältnis zwischen Isocyanat- und Hydroxyl-Gruppen 1.2 bis 5, insbesondere von 1.5 bis 3. Bevorzugt verbleibt nach der Umsetzung aller Hydroxylgruppen des Polyols ein Gehalt an freien Isocyanatgruppen von 0.5 bis 5 Gewichts-%, bezogen auf das gesamte Polyurethanpolymer **D.**

Gegebenenfalls kann das Polyurethanpolymer **D** unter Mitverwendung von Weichmachern hergestellt werden, wobei die verwendeten Weichmacher keine gegenüber Isocyanaten reaktiven Gruppen enthalten.

Das Aldimins der Formel (XI), insbesondere der Formel (XI'), ist erhältlich durch eine Kondensationsreaktion unter Abspaltung von Wasser zwischen einem Amin der Formel (V) und einem Aldehyd der Formel (VI), insbesondere einem Aldehyd der Formel (VI a). Das Amin der Formel (V) weist aliphatische primäre Aminogruppen und aliphatische HX-Gruppen auf. Es ist wesentlich, dass das Amin der Formel (V) keine aromatischen Amino-Gruppen und keine aromatischen HX-Gruppen aufweist. Der Aldehyd wird hierbei in Bezug auf die primären aliphatischen Aminogruppen des Amins der Formel (V) stöchiometrisch oder im stöchiometrischen Überschuss eingesetzt.

HX-R¹-NH₂ (V)

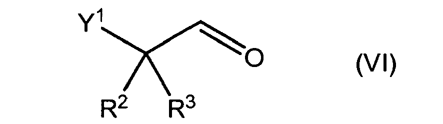

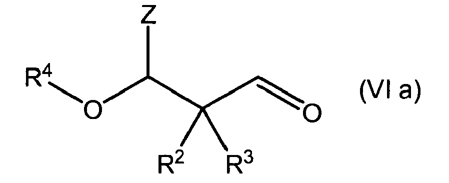

In den Formeln (V), (VI) und (VI a) weisen X, R¹, R², R³, R⁴, Y¹ und Z die bereits erwähnten Bedeutungen auf.

Als Amin der Formel (V) geeignet sind in einer ersten Ausführungsform Verbindungen mit einer oder zwei primären aliphatischen und einer sekundären Aminogruppe, wie beispielsweise N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, 3-(4-Aminobutyl)-piperidin, N-Aminoethyl-piperazin, Diethylentriamin (DETA), Bis-hexamethylentriamin (BHMT); Di- und Triamine aus der Cyanoethylierung oder Cyanobutylierung von primären Mono- und Diaminen, beispielsweise N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, 3-Methylamino-1-pentylamin, 3-Ethylamino-1-pentylamin, 3-Butylamino-1-pentylamin, 3-Hexylamino-1-pentylamin, 3-(2-Ethylhexyl)amino-1-pentylamin, 3-Dodecylamino-1-pentylamin, 3-Cyclohexylamino-1-pentylamin, Dipropylentriamin (DPTA), N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin, und Fettdiamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, wie sie beispielsweise unter dem Handelsnamen Duomeen^{®} von Akzo Nobel erhältlich sind; die Produkte aus der Michael-artigen Addition von aliphatischen primären Di- oder Triaminen mit Acrylnitril, Malein- oder Fumarsäurediestern, Citraconsäurediestern, Acryl- und Methacrylsäureestern, Acryl- und Methacrylsäureamiden und Itaconsäurediestern, umgesetzt im Molverhältnis 1:1.

Als Amin der Formel (V) geeignet sind in einer zweiten Ausführungsform aliphatische Hydroxyamine, wie beispielsweise 2-Aminoethanol, 2-Methylaminoethanol, 1-Amino-2-propanol, 3-Amino-1-propanol, 4-Amino-1-butanol, 4-Amino-2-butanol, 2-Amino-2-methylpropanol, 5-Amino-1-pentanol, 6-Amino-1-hexanol, 7-Amino-1-heptanol, 8-Amino-1-octanol, 10-Amino-1-decanol, 12-Amino-1-dodecanol, 4-(2-Aminoethyl)-2-hydroxyethylbenzol, 3-Aminomethyl-3,5,5-trimethyl-cyclohexanol; eine primäre Aminogruppe tragende Derivate von Glykolen wie Diethylenglykol, Dipropylenglykol, Dibutylenglykol und höheren Oligomeren und Polymeren dieser Glykole, beispielsweise 2-(2-Aminoethoxy)-ethanol, Triethylenglykol-monoamin, α-(2-Hydroxymethylethyl)-ω-(2-aminomethylethoxy)-poly(oxy(methyl-1,2-ethandiyl)); eine Hydroxylgruppe und eine primäre Aminogruppen tragende Derivate von polyalkoxylierten drei- oder höherwertigen Alkoholen; Produkte aus der einfachen Cyanoethylierung und anschliessender Hydrierung von Glykolen, beispielsweise 3-(2-Hydroxyethoxy)-propylamin, 3-(2-(2-Hydroxyethoxy)-ethoxy)-propylamin und 3-(6-Hydroxyhexyloxy)-propylamin.

Als Amin der Formel (V) geeignet sind in einer dritten Ausführungsform aliphatische Mercaptoamine, wie beispielsweise 2-Aminoethanthiol (Cysteamin), 3-Aminopropanthiol, 4-Amino-1-butanthiol, 6-Amino-1-hexanthiol, 8-Amino-1-octanthiol, 10-Amino-1-decanthiol, 12-Amino-1-dodecanthiol und Aminothiozucker wie 2-Amino-2-deoxy-6-thioglucose.

Bevorzugte Amine der Formel (V) sind Amine, welche ausgewählt sind aus der Gruppe bestehend aus N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, DETA, DPTA, BHMT und Fettdiamine wie N-Cocoalkyl-1,3-propandiamin, N-Oleyl-1,3-propandiamin, N-Soyaalkyl-1,3-propandiamin und N-Talgalkyl-1,3-propandiamin; Produkte aus der Michael-artigen Addition von aliphatischen primären Diaminen mit Malein-und Fumarsäurediestern, Acryl- und Methacrylsäureestern, Acryl- und Methacrylsäureamiden, bevorzugt mit Maleinsäurediestern, insbesondere Maleinsäuredimethyl-, -diethyl-, -dipropyl- und -dibutylester, und mit Acrylsäureestern, insbesondere Acrylsäuremethylester, umgesetzt im Molverhältnis 1:1; aliphatische Hydroxy- oder Mercaptoamine, in denen die primäre Aminogruppe von der Hydroxyl- oder Mercaptogruppe durch eine Kette von mindestens 5 Atomen, oder durch einen Ring, getrennt sind, insbesondere 5-Amino-1-pentanol, 6-Amino-1-hexanol und höhere Homologe davon, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin und höhere Oligo- und Polymere davon, 3-(2-Hydroxyethoxy)-propylamin, 3-(2-(2-Hydroxy-ethoxy)-ethoxy)-propylamin sowie 3-(6-Hydroxyhexyloxy)-propylamin.

Besonders bevorzugt sind Amine der Formel (V), in welchen X für O oder für N-R² steht, wobei R² für eine Alkylgruppe mit 1 bis 4 C-Atomen insbesondere für Methyl, Ethyl, Propyl oder Butyl, bevorzugt für Methyl, steht. Damit hergestellte Polyurethanpolymere der Formel (I) haben die Eigenschaft, dass derartige erfindungsgemässe Polyurethanpolymer enthaltenden Polyurethanzusammensetzungen sich durch einen schnellen Aufbau der Anfangsfestigkeiten auszeichnen.

Das Amin der Formel (V), insbesondere der dem Amin der Formel (V) zugrunde liegende Rest R¹, weist vorzugsweise ein Molekulargewicht, bzw. eine Formelgewicht, von 28 bis 100 g/mol auf.

Zur Herstellung eines Aldimins der Formel (XI) oder (XI') sind Aldehyde der Formel (VI) oder (VI a) geeignet. Diese Aldehyde haben die Eigenschaft, dass ihre Reste Y¹, R² und R³ keine Gruppierungen aufweisen, die in Abwesenheit von Wasser mit Isocyanatgruppen reaktionsfähig sind; insbesondere weisen Y¹, R² und R³ keine Hydroxylgruppen, keine primären oder sekundären Aminogruppen, keine Harnstoffgruppen und keine anderen Gruppen mit aktivem Wasserstoff auf.

Aldehyde der Formel (VI) sind tertiäre aliphatische oder tertiäre cycloaliphatische Aldehyde, wie beispielsweise Pivalaldehyd (= 2,2-Dimethylpropanal), 2,2-Dimethyl-butanal, 2,2-Diethyl-butanal, 1-Methyl-cyclopentancarboxaldehyd, 1-Methyl-cyclohexancarboxaldehyd; sowie Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, -butanalen oder analogen höheren Aldehyden, insbesondere von 2,2-Dimethyl-3-hydroxypropanal.

Besonders geeignete Aldehyde der Formel (VI) sind Aldehyde der Formel (VI a). In einer ersten Ausführungsform steht R⁴ für einen Kohlenwasserstoffrest mit 1 bis 30 C-Atomen, der gegebenenfalls mindestens ein Heteroatom enthält.

Derartige Aldehyde stellen Ether von aliphatischen, araliphatischen oder cycloaliphatischen 2,2-disubstituierten 3-Hydroxyaldehyden mit Alkoholen der Formel HO-R⁴ dar, insbesondere Fettalkoholen. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären araliphatischen oder sekundären cycloaliphatischen Aldehyden, wie beispielsweise 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd.

Als Beispiele solcher Aldehyde genannt werden sollen 2,2-Dimethyl-3-(2-ethylhexyloxy)-propanal, 2,2-Dimethyl-3-lauroxy-propanal und 2,2-Dimethyl-3-stearoxy-propanal.

In einer zweiten Ausführungsform steht R⁴ für einen Rest

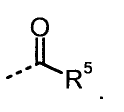

Geeignete Beispiele für derartige Aldehyde sind Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit geeigneten Carbonsäuren.

Beispiele für hierfür geeignete Carbonsäuren sind zum einen aliphatische Carbonsäuren, wie Ameisensäure, Essigsäure, Propionsäure, Buttersäure, Isobuttersäure, Valeriansäure, Capronsäure, 2-Ethyl-capronsäure, Caprinsäure, Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche solche Säuren enthalten. Als Carbonsäuren geeignet sind zum anderen aromatische Carbonsäuren, beispielsweise Benzoesäure oder die stellungsisomeren Tolylsäuren, Ethyl- oder Isopropyl- oder tert.-Butyl- oder Methoxy- oder Nitrobenzoesäuren. Als Carbonsäuren bevorzugt sind Fettsäuren.

Bevorzugte derartige Aldehyde sind 2,2-Dimethyl-3-lauroyloxypropanal, 2,2-Dimethyl-3-myristoyloxypropanal 2,2-Dimethyl-3-palmitoyloxy-propanal, 2,2-Dimethyl-3-stearoyloxy-propanal und 2,2-Dimethyl-3-benzoyloxy-propanal, sowie analoge Ester anderer 2,2-disubstituierter 3-Hydroxyaldehyde.

In einer besonders bevorzugten Ausführungsform ist R⁵ ausgewählt aus der Gruppe bestehend aus Phenyl und den C₁₁-, C₁₃-, C₁₅- und C₁₇-Alkylgruppen.

Besonders bevorzugt als Aldehyd ist 2,2-Dimethyl-3-lauroyloxypro-panal.

In einer bevorzugten Herstellmethode eines vorgängig genannten Aldehyds wird ein 2,2-disubstituierter 3-Hydroxyaldehyd, beispielsweise 2,2-Dimethyl-3-hydroxypropanal, welcher beispielsweise aus Formaldehyd (oder Paraformaldehyd) und Isobutyraldehyd, gegebenenfalls in situ, hergestellt werden kann, mit einer Carbonsäure zum entsprechenden Ester umgesetzt. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

In einer besonders bevorzugten Ausführungsform sind diese Aldehyde geruchsfrei. Unter einer "geruchsfreien" Substanz wird eine Substanz verstanden, die so geruchsarm ist, dass sie für die meisten menschlichen Individuen nicht riechbar, das heisst mit der Nase nicht wahrnehmbar, ist.

Geruchsfreie Aldehyde sind einerseits insbesondere Aldehyde in welchen der Rest R⁴ für einen Kohlenwasserstoffrest mit 12 bis 30 C-Atomen, der gegebenenfalls Heteroatome enthält, steht.

Andererseits sind geruchsfreie Aldehyde in welchen der Rest R⁵ entweder für eine lineare oder verzweigte Alkylkette mit 11 bis 30 C-Atomen, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 C-Atomen steht.

Beispiele für geruchsfreie Aldehyde der Formel (VI) sind Veresterungsprodukte aus den bereits genannten 2,2-disubstituierten 3-Hydroxyaldehyden mit Carbonsäuren wie beispielsweise Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten, wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche diese Säuren enthalten. Bevorzugte Aldehyde der Formel (VIII) sind 2,2-Dimethyl-3-lauroyloxypropanal, 2,2-Dimethyl-3-myristoyloxypropanal, 2,2-Dimethyl-3-palmitoyloxypropanal und 2,2-Dimethyl-3-stearoyloxypropanal. Besonders bevorzugt ist 2,2-Dimethyl-3-lauroyloxypropanal.

Die Aldimine der Formel (XI') der geruchsfreien Aldehyde, sowie die daraus hergestellten Polyurethanpolymere der Formel (I) sind ebenfalls geruchsfrei.

Die Polyurethanpolymere der Formel (I) mit aliphatischen Aldimingruppen haben die Eigenschaft, dass ihre Aldimingruppen nicht zu Enamingruppen tautomerisieren können, da sie als Substituenten in α-Stellung zum C-Atom der Aldimingruppe keinen Wasserstoff enthalten. Aufgrund dieser Eigenschaft bilden sie zusammen mit Isocyanatgruppen enthaltenden Polyurethanpolymeren besonders lagerfähige, das heisst weitgehend viskositätsstabile, Mischungen, auch wenn hochreaktive aromatische Isocyanatgruppen wie diejenigen von TDI und MDI vorhanden sind.

In einem weiteren Aspekt betrifft die Erfindung, wie bereits vorgängig erwähnt und im Detail beim Polyurethanpolymer der Formel (I) bereits diskutiert, ein Verfahren zur Herstellung eines erfindungsgemässen amorphen, bei Raumtemperatur festen Polyurethanpolymers der Formel (I). Dieses Verfahren ist **dadurch gekennzeichnet, dass** dieses Polyurethanpolymer durch die Umsetzung eines Aldimins der Formel (XI), insbesondere der Formel (XI'), mit einem Isocyanatgruppen aufweisenden Polyurethanpolymer **D** der Formel (XII) hergestellt wird.

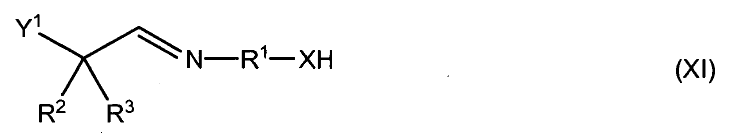

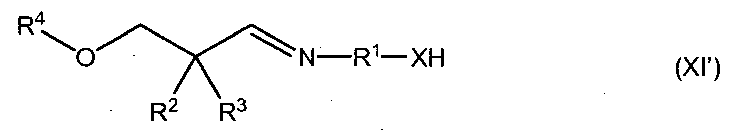

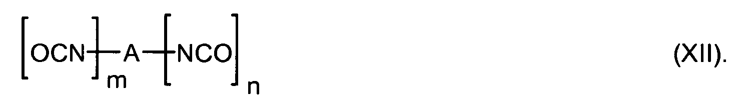

Das Polyurethanpolymer der Formel (I) ist vor und nach der Aushärtung bei Raumtemperatur fest und amorph und bildet bei Raumtemperatur einen transparenten Festkörper.

In einem weiteren Aspekt betrifft die Erfindung eine Heissschmelzklebstoffzusammensetzung enthaltend mindestens ein vorgängig beschriebenes amorphes, bei Raumtemperatur festes Polyurethanpolymer der Formel (I).

Der Gehalt an Polyurethanpolymer der Formel (I) beträgt typischerweise 40 - 100 Gew.-%, insbesondere 75 - 100 Gew.-% bevorzugt 80 - 100 Gew.-%, bezogen auf die gesamte Heissschmelzklebstoffzusammensetzung.

Die Heissschmelzklebstoffzusammensetzung kann weiterhin reaktive Polymere, insbesondere Isocyanat-Gruppen aufweisende Polyurethanpolymere aufweisen. Dies ist dann besonders vorteilhaft, wenn das Polyurethanpolymer der Formel (I) selber keine NCO-Gruppen mehr aufweist, d.h. wenn n = 0 ist. Bevorzugt sind dies einerseits die bei Raumtemperatur feste, Isocyanatgruppen aufweisende Polyurethanpolymere D, wie sie vorgängig bereits diskutiert wurden. Andererseits können bei Raumtemperatur feste, kristalline oder flüssige Isocyanatgruppen aufweisende Polyurethanpolymere verwendet werden. Diese werden insbesondere aus Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, und Polyisocyanaten in bekannter Art und Weise hergestellt.

Die Heissschmelzklebstoffzusammensetzung kann gegebenenfalls weitere Substanzen in der Form von in der Polyurethanchemie üblicherweise eingesetzten Hilfs- und Zusatzstoffen enthalten.

Mögliche derartige Hilfs- und Zusatzstoffe sind beispielsweise
- Weichmacher, beispielsweise Carbonsäureester wie Phthalate, beispielsweise Dioctylphthalat, Diisononylphthalat oder Diisodecylphthalat, Adipate, beispielsweise Dioctyladipat, Azelate und Sebacate, organische Phosphor- und Sulfonsäureester oder Polybutene;
- nicht-reaktive thermoplastische Polymere, beispielsweise Homo- oder Copolymere von ungesättigten Monomeren, insbesondere aus der Gruppe umfassend Ethylen, Propylen, Butylen, Isobutylen, Isopren, Vinylacetat oder höhere Ester davon, und (Meth)acrylat, wobei Ethylenvinylacetat-Copolymere (EVA), ataktische Poly-α-Olefine (APAO), Polypropylene (PP) und Polyethylene (PE) besonders geeignet sind;
- Lösemittel;
- anorganische und organische Füllstoffe, zum Beispiel gemahlene oder gefällte Calciumcarbonate, welche gegebenenfalls mit Stearaten beschichtet sind, Russe, insbesondere industriell hergestellte Russe (im Folgenden als "Russ" bezeichnet), Baryt (BaS04, auch Schwerspat genannt), Kaoline, Aluminiumoxide, Aluminiumhydroxide, Kieselsäuren, insbesondere hochdisperse Kieselsäuren aus Pyrolyseprozessen, PVC-Pulver oder Hohlkugeln;
- Fasern, beispielsweise aus Polyethylen;
- Pigmente, beispielsweise Titandioxid oder Eisenoxide;
- Katalysatoren, welche die Hydrolyse der blockierten Aminogruppen beschleunigen, wie beispielsweise organische Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester;
- Katalysatoren, welche die Reaktion der Isocyanatgruppen beschleunigen, beispielsweise Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismut-tris(neodecanoat), und tertiäre Aminogruppen enthaltende Verbindungen wie 2,2'-Dimorpholinodiethylether und 1,4-Diazabicyclo[2.2.2]octan;
- Rheologie-Modifizierer, beispielsweise Verdickungsmittel oder Thixotropierungsmittel, zum Beispiel Harnstoffverbindungen, Polyamidwachse, Bentonite oder pyrogene Kieselsäuren;
- Reaktivverdünner und Vernetzer, beispielsweise Oligomere von Diisocyanaten wie MDI, TDI und IPDI, insbesondere in Form von Isocyanuraten, Carbodiimiden, Uretoniminen, Biureten, Allophanaten oder Iminooxadiazindionen, Addukte von Diisocyanaten wie MDI, TDI und IPDI mit kurzkettigen Polyolen, sowie Adipinsäuredihydrazid und andere Dihydrazide;
- latente Härter mit blockierten Aminogruppen, wie beispielsweise Ketimine, Oxazolidine, Enamine oder Aldimine;
- Trocknungsmittel, wie beispielsweise Molekularsiebe, Calciumoxid, hochreaktive Isocyanate wie p-Tosylisocyanat, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane ("Silane") wie beispielsweise Epoxysilane, Vinylsilane, (Meth)acrylsilane, Isocyanatosilane, Carbamatosilane, Alkylsilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, darauf zu achten, dass solche Zusätze die Lagerstabilität der Heissschmelzklebstoffzusammensetzung nicht beeinträchtigen. Das heisst, dass diese Zusätze während der Lagerung die zur Vernetzung führenden Reaktionen wie Hydrolyse der blockierten Aminogruppen oder Vernetzung der Isocyanatgruppen nicht in signifikantem Ausmass auslösen dürfen. Insbesondere bedeutet dies, dass all diese Zusätze kein oder höchstens Spuren von Wasser enthalten sollten. Es kann sinnvoll sein, gewisse Zusätze vor dem Einmischen chemisch oder physikalisch zu trocknen.

Es ist dem Fachmann selbstverständlich klar, dass er gewisse dieser aufgezählten optionalen Bestandteile nicht verwenden kann, wenn er einen transparenten Heissschmelzklebstoff formulieren soll.

Das Polyurethanpolymer der Formel (I), bzw. eine daraus formulierte Heissschmelzklebstoffzusammensetzung, zeichnen sich insbesondere dadurch aus, dass sie eine bessere Formstabilität auch über längere Zeiten verfügen, bzw. einen geringen kalten Fluss aufweisen.

Aufgrund seines amorphen Charakters eignet sich das Polyurethanpolymer der Formel (I), bzw. eine daraus formulierte Heissschmelzklebstoffzusammensetzung, bestens für das Verkleben von transparenten Substraten, insbesondere Glas.

Isocyanatgruppen aufweisende Polymere reagieren, bzw. polymerisieren bei Kontakt mit Wasser. Das hierfür benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Besprühen, oder es kann der Zusammensetzung bei der Applikation eine Wasser enthaltende Komponente zugesetzt werden.

Polyurethanpolymere der Formel (I), welche sowohl Isocyanatgruppen als auch Aldiminogruppen aufweisen, d.h. bei welchen n > 0 ist, können bei Wasserkontakt mit sich selber chemisch vernetzen. Bei Polyurethanpolymeren der Formel (I) mit lediglich Aldiminogruppen, d.h. bei welchen n = 0 ist, werden für ein chemisches Vernetzen weitere Isocyanatgruppen aufweisende Polymere benötigt. Sind diese nicht vorhanden, stellt das Polyurethanpolymere der Formel (I), bzw. die daraus formulierte Zusammensetzung, zwar ebenfalls eine thermoplastische Komponente dar und kann grundsätzlich als Heissschmelzklebstoff verwendet werden, das Polyurethanpolymere der Formel (I), bzw. das daraus resultierende Hydrolyseprodukt, wird jedoch nicht chemisch eingebunden und ist reversibel aufschmelzbar, d.h. das Polymer bzw. die Zusammensetzung ist kein reaktiver Heissschmelzklebstoff.

Die Applikationstemperatur der Heissschmelzklebstoffzusammensetzung ist stark abhängig von den Erweichungstemperaturen der vorhandenen thermoplastischen Komponenten, insbesondere von der Erweichungstemperatur des amorphen, bei Raumtemperatur festen Polyurethanpolymers der Formel (I). Die Applikation eines Heissschmelzklebstoffs erfolgt typischerweise bei einer Temperatur, bei der die thermoplastischen Komponenten geschmolzen vorliegen. Insbesondere sind die Applikationstemperaturen zwischen 85 °C und 200 °C, insbesondere zwischen 100 °C und 150 °C.

Wird die vorgängig beschriebene Heissschmelzklebstoffzusammensetzung heiss, das heisst bei einer Temperatur oberhalb des Erweichungspunktes des Polyurethanpolymers der Formel (I), appliziert, erfolgt die Aushärtung durch zwei Vorgänge. Einerseits verfestigt sich die Zusammensetzung beim Abkühlen, indem das Polyurethanpolymer der Formel (I) und weitere im Heissschmelzklebstoff befindlichen thermoplastischen Komponenten erstarren, und dadurch die Viskosität der Zusammensetzung stark erhöht wird. Diese physikalische Aushärtung beendet die Offenzeit ab einem gewissen Zeitpunkt und ergibt die Anfangsfestigkeit der Zusammensetzung. Parallel dazu erfolgt die chemische Aushärtung der Zusammensetzung mittels Feuchtigkeit, verbunden mit der Ausbildung der Endfestigkeit.

Der Heissschmelzklebstoffzusammensetzung zeichnet sich insbesondere dadurch aus, dass er rasch und blasenfrei aushärtet.

Somit betrifft die vorliegende Erfindung weiterhin eine ausgehärtete Heissschmelzklebstoffzusammensetzung, welche erhalten wird durch die Reaktion von Feuchtigkeit mit einer beschriebenen Heissschmelzklebstoffzusammensetzung.

Die ausgehärtete Heissschmelzklebstoffzusammensetzung zeigt durch den Einsatz des Polyurethanpolymers der Formel (I) bedingtes geringes Kriechen, d.h. Sich-Verformen unter statischer Last, vergleichen mit den entsprechenden Klesbtoffen, welche kein Polyurethanpolymers der Formel (I) aufweisen.

Die Heissschmelzklebstoffzusammensetzung wird insbesondere als Heissschmelzklebstoff oder Vergussmasse verwendet.

Vorwiegend erfolgt diese Verwendung im Fahrzeugbau oder Tief- oder Hochbau oder in der Glas- oder Verpackungs- oder Elektronikindustrie.

Der Term Fahrzeugbau beinhaltet auch Prozesse, welche für die Herstellung von Einbauteilen verwendet werden. Besonders wichtiges Einsatzgebiet ist die Kaschierung. Die Heissschmelzklebstoffzusammensetzung wird insbesondere für die Herstellung von Innenauskleidungsteilen von Fahrzeugen, insbesondere von Automobilen, verwendet. Bespiele für derartige Innenauskleidungsteile sind Türseitenteile, Schalttafeln, Hutablagen, Fertighimmel, Schiebehimmel, Mittelkonsolen, Handschuhfächer, Sonnenblenden, Säulen, Tür- und Armgriffe, Boden-, Ladeboden- und Kofferraumgruppen sowie Schlafkabinen- und Rückwände der Liefer- und Lastkraftwagen. Dafür werden typischerweise Vakuumtiefziehverfahren und Presskaschierungsverfahren eingesetzt.

Aufgrund der Eigenschaften, insbesondere der Transparenz, können bevorzugte Heissschmelzklebstoff-Zusammensetzungen sehr gut als standfeste Vergussmasse in der Elektrik- und/oder Elektronikindustrie, beispielsweise beim Vergiessen bzw. Versiegeln von Chips oder anderen Elektronikkomponenten, verwendet werden. Die HeissschmelzklebstoffZusammensetzung kann beispielsweise jedoch auch für den Verguss von Nocken für die Herstellung von Transportbändern verwendet werden.

In der Verpackungsindustrie findet die HeissschmelzklebstoffZusammensetzung vorzugsweise Einsatz für sichtbare Verklebungen, vor allem dort, wo Ästhetik wichtig ist. Beispiele hierfür sind der Einsatz beim Verkleben von durchsichtigen Folien oder bei der Herstellung von durchsichtigen Faltschachteln.

In einem weiteren Aspekt schliesslich betrifft die vorliegende Erfindung ein Verfahren der Verklebung von Substraten **S1** und **S2** umfassend die Schritte:
i) Aufheizen einer vorgängig beschriebenen Heissschmelzklebstoffzusammensetzung auf eine Temperatur zwischen 85 °C und 200 °C, insbesondere zwischen 120 °C und 160 °C;
ii) Applikation der aufgeheizten Zusammensetzung auf ein Substrat **S1**;
iii) Kontaktieren der applizierten Zusammensetzung mit einem zweiten Substrat **S2** innerhalb der Offenzeit;
wobei das zweite Substrat **S2** aus dem gleichen oder einem unterschiedlichen Material wie das Substrat **S1** besteht.

Beim Schritt i) des Aufheizens der Heissschmelzklebstoffzusammensetzung auf eine Temperatur zwischen 85 °C und 200 °C, insbesondere zwischen 120 °C und 160 °C, wird der Heissschmelzklebstoff aufgeschmolzen.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Leder, Stoffe, Papier, Holz, mit Harz gebundene Holzwerkstoffe, Harz-Texil-Compositewerkstoffe, Kunststoffe wie Polyvinylchlorid (PVC), Acrylonitril-Butadien-StyrolCopolymere (ABS), SMC (Sheet Moulding Composites), Polycarbonat (PC), Polyamid (PA), Polyester, Polyoxymethylen (POM), Epoxidharze, Polyurethane (PUR), Polyolefine (PO), insbesondere mittels Plasma, Corona oder Flammen oberflächenbehandeltes Polyethylen (PE) und Polypropylen (PP), Ethylen/Propylen-Copolymere (EPM) und Ethylen/Propylen-Dien-Terpolymere (EPDM); sowie Farben und Lacke, insbesondere Automobillacke.

Die Substrate **S1** und/oder **S2** können bei Bedarf vor dem Applizieren der vorgängig beschriebenen Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen oder Behandeln mit Reinigern oder Lösemitteln; oder das Aufbringen eines Haftvermittlers, einer Haftvermittlerlösung oder eines Primers; oder eine Beflammung oder eine Plasmabehandlung, insbesondere eine Luftplasma-Vorbehandlung bei atmosphärischem Umgebungsdruck.

Aus diesen beschrieben Verfahren der Verklebung entsteht ein Artikel.

Dieser Artikel ist insbesondere ein Bauwerk, insbesondere ein Bauwerk des Hoch- oder Tiefbaus, oder ein industrielles Gut oder ein Konsumgut, insbesondere ein Fenster, eine Haushaltmaschine, oder ein Transportmittel, insbesondere ein Fahrzeug zu Wasser oder zu Lande, bevorzugt ein Automobil, ein Bus, ein Lastkraftwagen, ein Zug oder ein Schiff, oder ein Anbauteil eines Transportmittels, oder ein Artikel der Möbel-, Textil- oder Verpackungsindustrie.

Geeignete Anwendungen sind beispielsweise das Verkleben von Bauteilen im Hoch- oder Tiefbau und bei der Fertigung oder Reparatur von industriellen Gütern oder Konsumgütern, insbesondere von Fenstern, Haushaltmaschinen oder Transportmitteln wie Fahrzeugen zu Wasser oder zu Lande, bevorzugt Automobile, Busse, Lastkraftwagen, Züge oder Schiffe; oder das Abdichten von Fugen, Nähten oder Hohlräumen in der industriellen Fertigung oder Reparatur, oder im Hoch- oder Tiefbau.

### Beispiele

### Beschreibung der Prüfmethoden

Der totale **Gehalt an Aldiminogruppen und freien Aminogruppen** in den hergestellten Verbindungen ("**Amin-Gehalt**") wurde titrimetrisch bestimmt (mit 0.1N HClO₄ in Eisessig, gegen Kristallviolett) und ist stets angegeben in mmol NH₂/g (auch wenn es sich nicht nur um primäre Aminogruppen handelt).

### Fliessverhalten

Für das Fliessverhalten wurde die folgende Taler-Methode verwendet:

Es wurden je zwei Teflon®-Ringe unterschiedlicher Höhe (4 bzw. 6mm) und mit einem Innendurchmesser von ca. 35 mm auf ein silikonisiertes Papier gelegt. Die in Tabelle 1 angegebenen Heissschmelzklebstoffe wurden auf eine Temperatur von 150 °C aufgeheizt und in geschmolzenen Zustand in diese Ringe gegossen und mittels Spatel abgeglättet. Nach dem Erkalten auf Raumtemperatur des Klebstoffs wurde der Formring entfernt, so dass zwei zylindrische Formkörper von 4 mm, bzw. 6 mm, Höhe ("h") freistehend gebildet wurden. Es wurde der Durchmesser gemessen und als *D₀* in Tabelle 1 angegeben. Anschliessend wurde der Durchmesser des zylindrischen Formkörpers nach Lagerung von 3 Tagen, bzw. von 2 Monaten, d.h. nach vollständiger Aushärtung, bei 23°C und 55 % relativer Luftfeuchtigkeit gemessen und als *D_{3d}*, bzw. *D₂ₘ*, in Tabelle 1 angegeben. Für das Mass des Fliessverhaltens wurde der die prozentuale Zunahme Δ*_{D}* des Durchmessers angegeben (Δ*_{D}* = [*D₂ₘ* / *D₀*]-1) herangezogen. Je grösser das Fliessen ist, umso höher ist der Wert Δ*_{D}*.

### Blasen und Aspekt

Die ausgehärteten Probekörper wurden visuell beurteilt und in Tabelle 1 aufgeführt. In Bezug auf die Beurteilung der Transparenz wurde der Probekörper auf ein Blatt, welches mit einem Text der Drucktype Arial in eine Schriftgrösse von 12 Punkt beschrieben ist, gelegt. Konnte die Schrift durch den Probekörper hindurch problemlos gelesen werden, wurde die Transparenz als "hoch" beurteilt, war dies nicht der Fall, wurde sie als "tief" beurteilt.

### Aldimin ALD

In einem Rundkolben wurden unter Stickstoffatmosphäre 28.06 g (0.099 mol) 2,2-Dimethyl-3-lauroyloxy-propanal vorgelegt. Unter kräftigem Rühren wurden aus einem Eintropftrichter innerhalb von 3 Minuten 10.00 g (0.095 mol) 2-(2-Aminoethoxy)-ethanol (Diglycolamine^{®} Agent; Huntsman) zugegeben, wobei die Temperatur des Reaktionsgemisches auf 40°C anstieg. Danach wurden die flüchtigen Bestandteile im Vakuum entfernt (10 mbar, 80°C). Man erhielt 36.3 g einer farblosen, bei Raumtemperatur dünnflüssigen, klaren und geruchlosen Flüssigkeit, die einen Amin-Gehalt von 2.58 mmol NH₂/g aufwies.

Tabelle 1 gibt die Zusammensetzungen der Beispiele ***1*** bis ***6*** sowie der Vergleichsbeispielen von nicht-erfindungsgemässen Beispielen ***Ref.1*** bis ***Ref.5*** in Gewichtsteilen an. Als bei Raumtemperatur flüssiges Polyesterpolyol wurde Dynacoll® 7250 (Degussa) (*"PE1-1"*) als bei Raumtemperatur festes amorphes Polyesterpolyol wurde Dynacoll® 7150 (Degussa) (*"PE2-1"*) verwendet. Als Polyisocyanat wurden Desmodur® 44 MC (Flakes, Bayer) (*"MDI"*) oder Desmodur® T-100 (Bayer)("*TDI*") verwendet. Der Einsatz an MDI wurde so berechnet, dass pro Equivalent OH zwei Equivalent NCO eingesetzt wurden.

**Tabelle 1. Zusammensetzungen von Heissschmelzklebstoffzusammensetzungen und deren Resultate.**

| | ***1*** | ***2*** | ***3*** | ***4*** | ***5*** | ***Ref.1*** | ***Ref.2*** | ***Ref.3*** | ***Ref.4*** | ***6*** | ***Ref.5*** |
|---|---|---|---|---|---|---|---|---|---|---|---|
| *PE1-1* | 10 | 20 | 30 | 40 | 50 | 50 | 60 | 70 | 80 | 50 | 50 |
| *PE2-1* | 90 | 80 | 70 | 60 | 50 | 50 | 40 | 30 | 20 | 50 | 50 |
| *ALD* | 9.2 | 9.2 | 9.2 | 9.2 | 9.2 | | 9.2 | 9.2 | 9.2 | 10 | |
| *MDI* | 19.1 | 18.1 | 17.1 | 16.1 | 15.1 | 15.1 | 14.1 | 13.1 | 12.1 | | |
| *TDI* | | | | | | | | | | 10.2 | 10.2 |
| *PE1-1*/*PE2-1* | 0.11 | 0.25 | 0.43 | 0.67 | 1.00 | 1.00 | 1.50 | 2.33 | 4.00 | 1.00 | 1.00 |
| h=6 mm | | | | | | | | | | | |
| *D₀*[mm] | 36.0 | 36.2 | 36.0 | 36.0 | 36.2 | 35.8 | 35.3 | 35.9 | 36.4 | 35.8 | 36.0 |
| *D_{3d}*[mm] | 36.0 | 36.2 | 36.1 | 36.4 | 36.4 | 39.8 | 38.1 | 37.2 | 38.5 | 36.0 | 44.5 |
| *D_{14d}*[mm] | 36.0 | 36.2 | 36.1 | 36.4 | 36.4 | 39.8 | 38.1 | 37.5 | 39.0 | 36.7 | 46.1 |
| Δ*_{D}*[%] | 0 | 0 | 0 | 1 | 1 | 11 | 8 | 4 | 7 | 3 | 28 |
| h=4 mm | | | | | | | | | | | |
| *D₀*[mm] | 33.3 | 33.6 | 33.3 | 32.7 | 32.5 | 33.2 | 32.3 | 32.0 | 34.0 | 32.5 | 32.0 |
| *D_{3d}*[mm] | 33.3 | 33.6 | 33.3 | 32.9 | 32.8 | 34.8 | 32.9 | 32.7 | 34.2 | 32.6 | 36.5 |
| *D₂ₘ*[mm] | 33.3 | 33.6 | 33.3 | 32.9 | 32.8 | 34.8 | 32.9 | 32.7 | 35.0 | 32.8 | 37.0 |
| Δ*_{D}*[%] | 0 | 0 | 0 | 1 | 1 | 5 | 2 | 2 | 3 | 1 | 16 |
| Blasen | keine | keine | keine | keine | keine | viele | keine | keine | keine | keine | viele |
| Transparenz | hoch | hoch | hoch | hoch | hoch | tief | hoch | hoch | hoch | hoch | tief |

## Patentansprüche

1. Amorphes, bei Raumtemperatur festes Polyurethanpolymer der Formel (I) 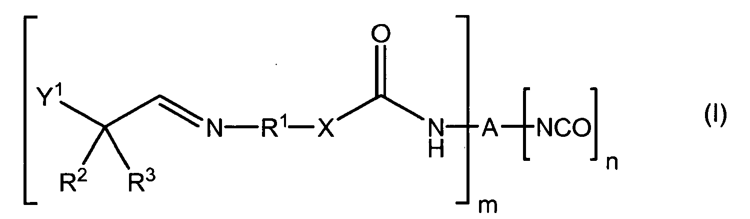 wobei
R¹ für einen zweiwertigen aliphatischen oder cycloaliphatischen oder araliphatischen Kohlenwasserstoffrest mit 2 bis 12 C-Atomen, welcher gegebenenfalls mindestens ein Heteroatom, insbesondere in Form von Ether-Sauerstoff oder tertiärem Amin-Stickstoff, aufweist, steht;
R² und R³ entweder
unabhängig voneinander, je für einen einwertigen Kohlenwasserstoffrest mit 1 bis 12 C-Atomen stehen;
oder
zusammen einen zweiwertigen Kohlenwasserstoffrest mit 4 bis 20 C-Atomen bilden, der Teil eines, gegebenenfalls substituierten, carbocyclischen Rings mit 5 bis 8, bevorzugt 6, C-Atomen ist;
Y¹ für einen einwertigen Kohlenwasserstoffrest mit 1 bis 35 C-Atomen, welcher gegebenenfalls Heteroatome aufweist, steht;
X für O oder S oder N-R⁶ steht,
wobei R⁶ entweder
für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureestergruppe aufweist, steht,
oder
für einen Substituenten der Formel (II) steht 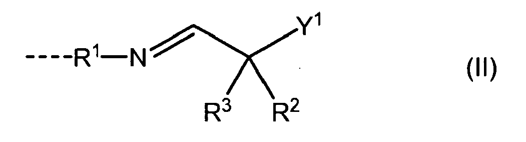
m für 1 oder 2 oder 3 steht, n für 0 oder 1 oder 2 steht mit der Massgabe, dass die Summe von m und n den Wert 2 oder 3 ergibt;
A für den Rest eines bei Raumtemperatur festen, Isocyanatgruppen aufweisenden Polyurethanpolymers **D** nach Entfernung von (m+n) Isocyanatgruppen steht und welches aus der Reaktion einer Polyol-Mischung umfassend
mindestens ein bei Raumtemperatur flüssiges Polyesterpolyol **PE1** und mindestens ein bei Raumtemperatur festes amorphes Polyesterpolyol **PE2**
sowie mindestens eines Polyisocyanates **PI** hergestellt wird, mit der Massgabe, dass in der Polyolmischung das Gewichts-Verhältnis an aller bei Raumtemperatur flüssigen Polyesterpolyole **PE1** zu aller bei Raumtemperatur festen amorphen Polyesterpolyole **PE2** < 1.25 ist.

2. Amorphes, bei Raumtemperatur festes Polyurethanpolymer gemäss Anspruch 1, **dadurch gekennzeichnet, dass** m=1 und n=1 ist.

3. Amorphes, bei Raumtemperatur festes Polyurethanpolymer gemäss Anspruch 1 oder 2, **dadurch gekennzeichnet, dass** R² und R³ je für eine Methylgruppe stehen.

4. Amorphes, bei Raumtemperatur festes Polyurethanpolymer gemäss einem der vorhergehenden Ansprüche, **dadurch gekennzeichnet, dass** Y¹ für einen Rest der Formel (III) steht 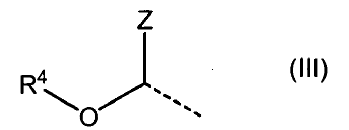 wobei Z für ein Wasserstoffatom oder für eine Alkyl- oder Arylalkylgruppe mit 1 bis 8 C-Atomen, bevorzugt für ein Wasserstoffatom, steht,
R⁴ entweder
für einen einwertigen Kohlenwasserstoffrest mit 1 bis 30 C-Atomen, welcher gegebenenfalls mindestens ein Heteroatom, insbesondere in Form von Ether-Sauerstoff, aufweist, steht, oder für einen Rest 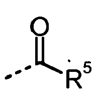 steht, wobei R⁵ für einen einwertigen Kohlenwasserstoffrest mit 1 bis 30 C-Atomen, welcher gegebenenfalls mindestens ein Heteroatom, insbesondere in Form von Ether-Sauerstoff, aufweist, steht

5. Amorphes, bei Raumtemperatur festes Polyurethanpolymer gemäss Anspruch 4, **dadurch gekennzeichnet, dass** R⁴ für den Rest 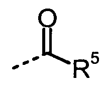 steht, wobei R⁵ für einen einwertigen Kohlenwasserstoffrest mit 1 bis 30 C-Atomen, insbesondere eine Alkylgruppe mit 11 bis 30 C-Atomen, steht.

6. Amorphes, bei Raumtemperatur festes Polyurethanpolymer gemäss einem der vorhergehenden Ansprüche, **dadurch gekennzeichnet, dass** R¹ ein Formelgewicht von 28 bis 100 g/mol aufweist.

7. Amorphes, bei Raumtemperatur festes Polyurethanpolymer gemäss einem der vorhergehenden Ansprüche, **dadurch gekennzeichnet, dass** das Polyisocyanat **PI** ein Diisocyanat ist, welches insbesondere ausgewählt ist aus der Gruppe bestehend aus 1,6-Hexamethylendiisocyanat (HDI), 1-Isocyanato-3,3,5-trimethyl-5-isocyanatomethylcyclohexan (=Isophorondiisocyanat oder IPDI), 2,4- und 2,6-Toluylendiisocyanat und beliebige Gemische dieser Isomeren (TDI) sowie 4,4'-, 2,4'- und 2,2'-Diphenylmethandiisocyanat und beliebige Gemische dieser Isomeren (MDI).

8. Amorphes, bei Raumtemperatur festes Polyurethanpolymer gemäss einem der vorhergehenden Ansprüche, **dadurch gekennzeichnet, dass** das bei Raumtemperatur flüssige Polyesterpolyol **PE1** und das bei Raumtemperatur feste amorphe Polyesterpolyol **PE2** je ein Molekulargewicht zwischen 2'000 und 10'000 g/mol aufweisen.

9. Amorphes, bei Raumtemperatur festes Polyurethanpolymer gemäss einem der vorhergehenden Ansprüche, **dadurch gekennzeichnet, dass** X = O oder N-R⁶, bevorzugt X = O, ist.

10. Verfahren zur Herstellung eines amorphen, bei Raumtemperatur festen Polyurethanpolymers der Formel (I) gemäss einem der Ansprüche 1 bis 9, **dadurch gekennzeichnet, dass** dieses Polyurethanpolymer durch die Umsetzung eines Aldimins der Formel (XI), insbesondere der Formel (XI'), mit einem Isocyanatgruppen aufweisenden Polyurethanpolymer **D** der Formel (XII) hergestellt wird

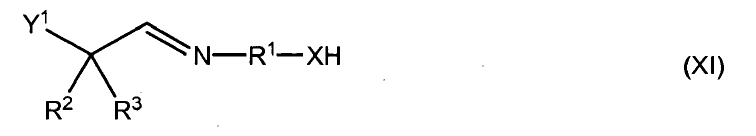

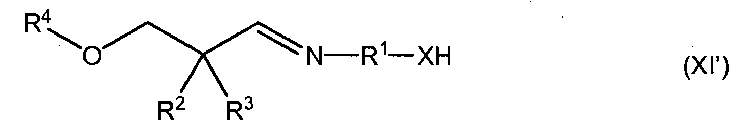

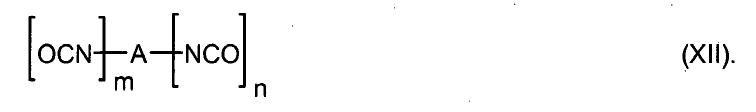

11. Heissschmelzklebstoffzusammensetzung enthaltend mindestens ein amorphes, bei Raumtemperatur festes Polyurethanpolymer der Formel (I) gemäss einem der Ansprüche 1 bis 9.

12. Heissschmelzklebstoffzusammensetzung gemäss Anspruch 11, **dadurch gekennzeichnet, dass** der Gehalt an Polyurethanpolymer der Formel (I) 40 - 100 Gew.-%, insbesondere 75 - 100 Gew.-% bevorzugt 80 - 100 Gew.-%, bezogen auf die gesamte Heissschmelzklebstoffzusammensetzung, beträgt.

13. Ausgehärtete Heissschmelzklebstoffzusammensetzung erhalten durch die Reaktion von Feuchtigkeit mit einer Heissschmelzklebstoffzusammensetzung gemäss Anspruch 11 oder 12.

14. Verwendung einer Heissschmelzklebstoffzusammensetzung gemäss Anspruch 11 oder 12 als Heissschmelzklebstoff oder Vergussmasse.

15. Verwendung gemäss Anspruch 14, **dadurch gekennzeichnet, dass** sie im Fahrzeugbau oder Tief- oder Hochbau oder in der Glas- oder Verpackungs- oder Elektronikindustrie erfolgt.

16. Verfahren der Verklebung von Substraten **S1** und **S2** umfassend die Schritte
i) Aufheizen einer Heissschmelzklebstoffzusammensetzung gemäss Anspruch 11 oder 12 auf eine Temperatur zwischen 85 °C und 200 °C, insbesondere zwischen 120 °C und 160 °C;
ii) Applikation der aufgeheizten Zusammensetzung auf ein Substrat **S1**;
iii) Kontaktieren der applizierten Zusammensetzung mit einem zweiten Substrat **S2** innerhalb der Offenzeit;
wobei das zweite Substrat **S2** aus dem gleichen oder einem unterschiedlichen Material wie das Substrat **S1** besteht.

## Claims

1. Amorphous polyurethane polymer which is solid at room temperature, of the formula (I) 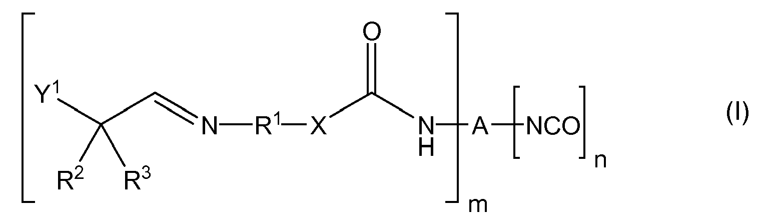 where
R¹ is a divalent aliphatic or cycloaliphatic or araliphatic hydrocarbon radical having 2 to 12 C atoms, which optionally contains at least one heteroatom, more particularly in the form of ether oxygen or tertiary amine nitrogen;
R² and R³ either
independently of one another are each a monovalent hydrocarbon radical having 1 to 12 C atoms;
or
together form a divalent hydrocarbon radical having 4 to 20 C atoms which is part of an unsubstituted or substituted carbocyclic ring having 5 to 8, preferably 6, C atoms;
Y¹ is a monovalent hydrocarbon radical having 1 to 35 C atoms which optionally contains heteroatoms;
X is O or S or N-R⁶,
where R⁶ either
is a monovalent hydrocarbon radical having 1 to 20 C atoms which optionally contains at least one carboxylic ester, nitrile, nitro, phosphonic ester, sulphone or sulphonic ester group,
or
is a substituent of the formula (II) 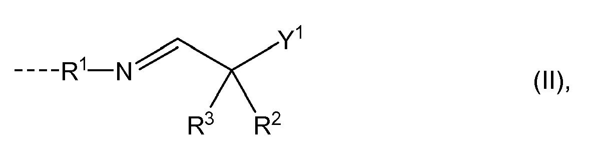
m is 1 or 2 or 3, n is 0 or 1 or 2, with the proviso that the sum of m and n is 2 or 3;
A is the radical of a polyurethane polymer **D,** solid at room temperature and containing isocyanate groups, following removal of (m+n) isocyanate groups and prepared from the reaction of a polyol mixture comprising
at least one polyester polyol **PE1** which is liquid at room temperature
and at least one polyester polyol **PE2** which is amorphous and solid at room temperature
and also of at least one polyisocyanate **PI**, with the proviso that in the polyol mixture the weight ratio of all polyester polyols **PE1** liquid at room temperature to all amorphous polyester polyols **PE2** amorphous and solid at room temperature is < 1.25.

2. Amorphous polyurethane polymer solid at room temperature according to Claim 1, **characterized in that** m is 1 and n is 1.

3. Amorphous polyurethane polymer solid at room temperature according to Claim 1 or 2, **characterized in that** R² and R³ are each a methyl group.

4. Amorphous polyurethane polymer solid at room temperature according to any of the preceding claims, **characterized in that** Y¹ is a radical of the formula (III) 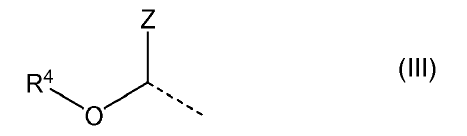
where Z is a hydrogen atom or is an alkyl or arylalkyl group having 1 to 8 C atoms, preferably a hydrogen atom,
R⁴ either
is a monovalent hydrocarbon radical having 1 to 30 C atoms which optionally contains at least one heteroatom, more particularly in the form of ether oxygen,
or
is a radical 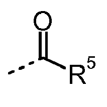 where R⁵ is a monovalent hydrocarbon radical having 1 to 30 C atoms which optionally contains at least one heteroatom, more particularly in the form of ether oxygen.

5. Amorphous polyurethane polymer solid at room temperature according to Claim 4, **characterized in that** R⁴ is the radical 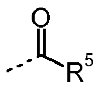 where R⁵ is a monovalent hydrocarbon radical having 1 to 30 C atoms, more particularly an alkyl group having 11 to 30 C atoms.

6. Amorphous polyurethane polymer solid at room temperature according to any of the preceding claims, **characterized in that** R¹ has a formula weight of 28 to 100 g/mol.

7. Amorphous polyurethane polymer solid at room temperature according to any of the preceding claims, **characterized in that** the polyisocyanate **PI** is a diisocyanate which more particularly is selected from the group consisting of 1,6-hexamethylene diisocyanate (HDI), 1-isocyanato-3,3,5-trimethyl-5-isocyanatomethylcyclohexane (isophorone diisocyanate or IPDI), 2,4- and 2,6-tolylene diisocyanate and any desired mixtures of these isomers (TDI) and 4,4'-, 2,4'- and 2,2'-diphenylmethane diisocyanate and any desired mixtures of these isomers (MDI).

8. Amorphous polyurethane polymer solid at room temperature according to any of the preceding claims, **characterized in that** the polyester polyol **PE1** which is liquid at room temperature and the polyester polyol **PE2** which is amorphous and solid at room temperature each have a molecular weight between 2000 and 10 000 g/mol.

9. Amorphous polyurethane polymer solid at room temperature according to any of the preceding claims, **characterized in that** X is O or N-R⁶, preferably O.

10. Process for preparing an amorphous polyurethane polymer solid which is at room temperature, of the formula (I), according to any of Claims 1 to 9, **characterized in that** this polyurethane polymer is prepared by reacting an aldimine of the formula (XI), more particularly of the formula (XI'), with a polyurethane polymer **D** containing isocyanate groups, of the formula (XII)

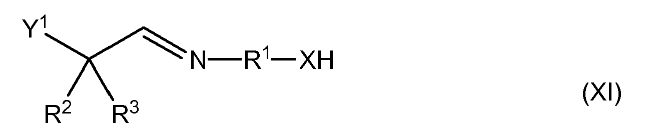

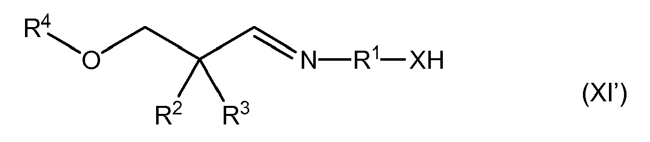

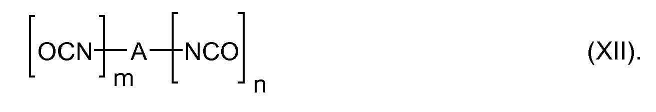

11. Hotmelt adhesive composition comprising at least one amorphous polyurethane polymer which is solid at room temperature, of the formula (I), according to any of Claims 1 to 9.

12. Hotmelt adhesive composition according to Claim 11, **characterized in that** the amount of polyurethane polymer of the formula (I) is 40% - 100%, more particularly 75% - 100%, preferably 80% - 100%, by weight, based on the total hotmelt adhesive composition.

13. Cured hotmelt adhesive composition obtained by reaction of moisture with a hotmelt adhesive composition according to Claim 11 or 12.

14. Use of a hotmelt adhesive composition according to Claim 11 or 12 as a hotmelt adhesive or casting compound.

15. Use according to Claim 14, **characterized in that** it takes place in vehicle construction or civil engineering or building construction or in the glass or packaging or electronics industry.

16. Method of adhesively bonding substrates **S1** and **S2,** comprising the steps of
i) heating a hotmelt adhesive composition according to Claim 11 or 12 to a temperature between 85°C and 200°C, more particularly between 120°C and 160°C;
ii) applying the heated composition to a substrate **S1;**
iii) contacting the applied composition with a second substrate **S2** within the open time;
the second substrate **S2** being composed of the same material as or a different material to the substrate **S1.**

## Revendications

1. Polymère de polyuréthane amorphe, solide à température ambiante de formule (I) 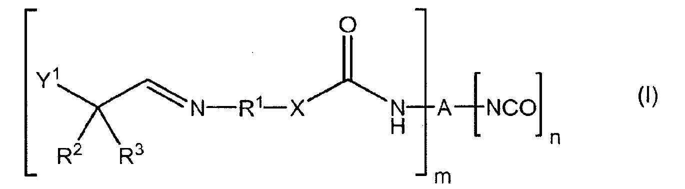 où
R¹ représente un radical hydrocarboné divalent, aliphatique ou cycloaliphatique ou araliphatique comprenant 2 à 12 atomes de carbone, qui présente le cas échéant au moins un hétéroatome, en particulier sous forme d'oxygène à fonction éther ou d'azote d'une amine tertiaire ;
R² et R³ représentent soit,
indépendamment l'un de l'autre, à chaque fois un radical hydrocarboné monovalent comprenant 1 à 12 atomes de carbone ;
soit forment ensemble un radical hydrocarboné divalent comprenant 4 à 20 atomes de carbone, qui fait partie d'un cycle carbocyclique, le cas échéant substitué, comprenant 5 à 8, de préférence 6, atomes de carbone ;
Y¹ représente un radical hydrocarboné monovalent, comprenant 1 à 35 atomes de carbone, qui présente le cas échéant des hétéroatomes ;
X représente O ou S ou N-R⁶,
où R⁶ représente
soit un radical hydrocarboné monovalent comprenant 1 à 20 atomes de carbone, qui présente le cas échéant au moins un groupe ester d'acide carboxylique, nitrile, nitro, ester d'acide phosphonique, sulfone ou ester d'acide sulfonique, soit un substituant de formule (II), 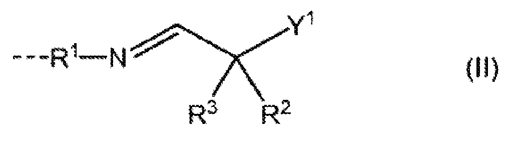
m vaut 1 ou 2 ou 3, n vaut 0 ou 1 ou 2, à condition
que la somme de m et n vaille 2 ou 3 ;
A représente un radical d'un polymère de polyuréthane **D** solide à température ambiante, présentant des groupes isocyanate après l'élimination de (m + n) groupes isocyanate et qui est préparé par la réaction
d'un mélange de polyols comprenant
au moins un polyesterpolyol **PE1** liquide à température ambiante et au moins un polyesterpolyol **PE2** amorphe, solide à température ambiante
ainsi que d'au moins un polyisocyanate **PI,** à condition que dans le mélange de polyols, le rapport pondéral de tous les polyesterpolyols **PE1** liquides à température ambiante à tous les polyesterpolyols **PE2** amorphes solides à température ambiante soit < 1,25.

2. Polymère de polyuréthane amorphe, solide à température ambiante selon la revendication 1, **caractérisé en ce que** m = 1 et n = 1.

3. Polymère de polyuréthane amorphe, solide à température ambiante selon la revendication 1 ou 2, **caractérisé en ce que** R² et R³ représentent chacun un groupe méthyle.

4. Polymère de polyuréthane amorphe, solide à température ambiante selon l'une quelconque des revendications précédentes, **caractérisé en ce que** Y¹ représente un radical de formule (III) 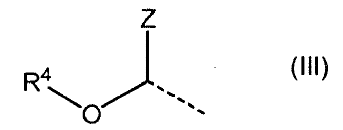
où Z représente un atome d'hydrogène ou un groupe alkyle ou arylalkyle comprenant 1 à 8 atomes de carbone, de préférence un atome d'hydrogène,
R⁴ représente
soit un radical hydrocarboné monovalent comprenant 1 à 30 atomes de carbone, qui présente le cas échéant au moins un hétéroatome, en particulier sous forme d'oxygène de fonction éther,
soit un radical 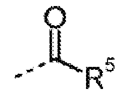 où R⁵ représente un radical hydrocarboné monovalent comprenant 1 à 30 atomes de carbone, qui présente le cas échéant au moins un hétéroatome, en particulier sous forme d'oxygène de fonction éther.

5. Polymère de polyuréthane amorphe, solide à température ambiante selon la revendication 4, **caractérisé en ce que** R⁴ représente le radical 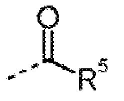 où R⁵ représente un radical hydrocarboné monovalent comprenant 1 à 30 atomes de carbone, en particulier un groupe alkyle comprenant 11 à 30 atomes de carbone.

6. Polymère de polyuréthane amorphe, solide à température ambiante selon l'une quelconque des revendications précédentes, **caractérisé en ce que** R¹ présente un poids moléculaire de 28 à 100 g/mole.

7. Polymère de polyuréthane amorphe, solide à température ambiante selon l'une quelconque des revendications précédentes, **caractérisé en ce que** le polyisocyanate **PI** est un diisocyanate, qui est en particulier choisi dans le groupe constitué par le 1,6-hexaméthylènediisocyanate (HDI), le 1-isocyanato-3,3,5-triméthyl-5-isocyanatométhylcyclohexane (=isophoronediisocyanate ou IPDI), le 2,4-toluylènediisocyanate et le 2,6-toluylènediisocyanate et les mélanges quelconques de ces isomères (TDI) ainsi que le 4 , 4'-diphénylméthanediisocyanate, le 2,4'-diphénylméthanediisocyanate et le 2,2'-diphénylméthanediisocyanate et les mélanges quelconques de ces isomères (MDI).

8. Polymère de polyuréthane amorphe, solide à température ambiante selon l'une quelconque des revendications précédentes, **caractérisé en ce que** le polyesterpolyol **PE1** liquide à température ambiante et le polyesterpolyol **PE2** amorphe, solide à température ambiante présentent chacun un poids moléculaire entre 2000 et 10 000 g/mole.

9. Polymère de polyuréthane amorphe, solide à température ambiante selon l'une quelconque des revendications précédentes, **caractérisé en ce que** X = O ou N-R⁶, de préférence X = O.

10. Procédé pour la préparation d'un polymère de polyuréthane amorphe, solide à température ambiante de formule (I) selon l'une quelconque des revendications 1 à 9, **caractérisé en ce que** ce polymère de polyuréthane est préparé par transformation d'une aldimine de formule (XI), en particulier de formule (XI'), avec un polymère de polyuréthane **D** présentant des groupes isocyanate de formule (XII)

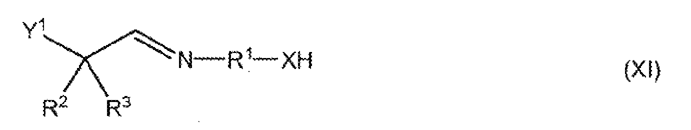

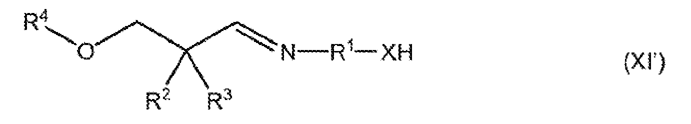

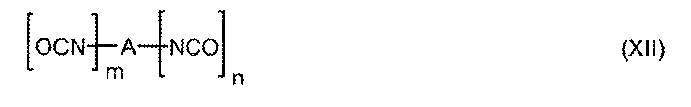

11. Composition adhésive thermofusible contenant au moins un polymère de polyuréthane amorphe, solide à température ambiante de formule (I) selon l'une quelconque des revendications 1 à 9.

12. Composition adhésive thermofusible selon la revendication 11, **caractérisée en ce que** la teneur en polymère de polyuréthane de formule (I) est de 40-100% en poids, en particulier de 75-100% en poids, de préférence de 80-100% en poids, par rapport à la composition adhésive thermofusible.

13. Composition adhésive thermofusible durcie obtenue par la réaction d'humidité avec une composition adhésive thermofusible selon la revendication 11 ou 12.

14. Utilisation d'une composition adhésive thermofusible selon la revendication 11 ou 12 comme adhésif thermofusible ou masse de scellement.

15. Utilisation selon la revendication 14, **caractérisée en ce qu'**elle a lieu dans la construction de véhicules ou la construction souterraine ou en élévation ou dans l'industrie du verre ou de l'emballage ou de l'électronique.

16. Procédé pour le collage de substrats **S1** et **S2** comprenant les étapes suivantes :
i) chauffage d'une composition adhésive thermofusible selon la revendication 11 ou 12 à une température entre 85°C et 200°C, en particulier entre 120°C et 160°C ;
ii) application de la composition chauffée sur un substrat **S1** ;
iii) mise en contact de la composition appliquée avec un deuxième substrat **S2** pendant le temps ouvert ;
le deuxième substrat **S2** étant constitué par le même matériau que le substrat **S1** ou par un matériau différent du substrat **S1**.
